# EUROPÄISCHE PATENTSCHRIFT

(11) **EP 2 129 626 B1**
(45) Veröffentlichungstag und Bekanntmachung des Hinweises auf die Patenterteilung: **23.01.2019**
(21) Anmeldenummer: 07856539.7
(22) Anmeldetag: 11.12.2007
(51) Int. Cl.: C01G 23/07, C09C 1/36, C01G 23/047

(54) **VERFAHREN ZUR HERSTELLUNG VON TITANDIOXID DURCH OXIDATION VON TITANTETRACHLORID**
METHOD FOR THE PRODUCTION OF TITANIUM DIOXIDE BY OXYGENATING TITANIUM TETRACHLORIDE
PROCÉDÉ DE PRODUCTION DE DIOXYDE DE TITANE PAR OXYDATION DE TÉTRACHLORURE DE TITANE

(30) Priorität: 20.12.2006 DE 102006060988; 09.10.2007 DE 102007048553
(43) Veröffentlichungstag der Anmeldung: 09.12.2009
(73) Patentinhaber: KRONOS INTERNATIONAL, INC., 51307 Leverkusen (DE)
(72) Erfinder: GRUBER, Rainer, 51379 Leverkusen (DE); MALCHAREK, Frank, 51109 Köln (DE)
(86) Internationale Anmeldenummer: PCT/EP2007/010780
(87) Internationale Veröffentlichungsnummer: WO 2008/077476

(56) Entgegenhaltungen:
- DE-B- 1 259 851
- US-A- 3 306 760
- US-A- 3 532 462
- US-A- 3 663 283
- US-A- 3 725 526
- US-A1- 2002 155 059
- US-B1- 6 419 893

## Beschreibung

### Gebiet der Erfindung

Die Erfindung betrifft die Herstellung von Titandioxid durch Oxidation von Titantetrachlorid und die nachfolgende Kühlung der Titandioxidpartikel-Gasmischung in einer Kühlstrecke, wobei die Gas-Partikel-Strömung in Rotation versetzt ist.

### Technologischer Hintergrund der Erfindung

Ein kommerziell angewendetes Verfahren zur Herstellung von Titandioxid-Pigment, das sogenannte Chloridverfahren, beruht darauf, dass Titantetrachlorid (TiCl₄) mit einem vorerhitzten oxidierenden Gas wie Sauerstoff, Luft etc. sowie mit bestimmten Additiven in einem Rohrreaktor zu Titandioxid und Chlorgas umgesetzt wird. Die Oxidationsreaktion ist stark exotherm, so dass das Reaktionsgemisch nach vollständigem Umsatz Temperaturen von über 1500 °C aufweist. Die gebildeten TiO₂-Pigmentpartikel werden in einer sich anschließenden Reaktor-Kühlstrecke auf unter etwa 400 °C abgekühlt und vom Gasstrom abgetrennt. Die Abkühlung direkt nach Abschluss der Partikelbildung muss schnell erfolgen, um weiteres Partikelwachstum zu verhindern. Dazu wird von hier ab der Rohrreaktor bzw. die Reaktor-Kühlstrecke von außen mit Wasser gekühlt.
Allerdings wird der Wärmeübergang in das Kühlwasser durch Anlagerung von TiO₂-Pigmentpartikeln an der Innenwand des Rohrreaktors bzw. der Reaktor-Kühlstrecke stark gehemmt. Aus diesem Grund werden gemäß US 2,721,626 Scheuerteilchen (Scrub Solids) in die Reaktor-Kühlstrecke eingebracht, die an den Innenwänden angelagertes Pigment ablösen sollen. Als Scrub Solids werden in diesem Patent abrasive Partikel wie Quarzsand oder aggregierte TiO₂-Partikel mit Korngrößen von etwa 0,15 bis 6,35 mm verwendet. Die Scrub Solids werden an einem oder mehreren Punkten der Reaktor-Kühlstrecke in die TiO₂-Gassuspension eingeführt.

In der horizontalen Reaktor-Kühlstrecke konzentrieren sich die Scheuerteilchen gewichtsbedingt bereits kurz nach ihrer Zugabe auf dem unteren Drittel des Rohrumfangs. Während dieser Bereich der Innenwand gründlich von anhaftendem Pigment gereinigt wird, werden höher gelegene Bereiche des Umfangs unzureichend abgereinigt und die Abkühlung der Gassuspension ist ungenügend. Um dennoch zu einem ausreichenden Wärmeübergang zu kommen, wird üblicherweise die dosierte Menge Scheuerteilchen deutlich erhöht. Dies belastet das System zur Herstellung, Dosierung und Abtrennung der Scheuerteilchen, wodurch u. a. erhöhte Kosten für Energieverbrauch und Instandhaltung entstehen.

Die US 6,419,893 B1 beschreibt ein Verfahren zur effizienteren Entfernung der TiO₂-Anlagerungen an der Innenwand der Reaktor-Kühlstrecke. Gemäß US 6,419,893 B1 befinden sich zumindest in einem Teilbereich der Reaktor-Kühlstrecke an der Innenwand schraubenförmig verlaufende Rippen als Leitelemente, wodurch die Scheuerteilchen in einer schraubenförmig verlaufenden Strömung durch die Kühlstrecke geführt werden. Die Rippen sind mit einer Steigung von 2 bis 6° angeordnet.

Die US 2006/0133989 A1 offenbart eine insgesamt helikal gestaltete Reaktor-Kühlstrecke, wodurch eine verbesserte Abreinigung der Innenwand mit den Scheuerteilchen erreicht werden soll.

Die DE 1 259 851 offenbart ein Verfahren zur Herstellung von Titandioxid durch Reaktion in der Gasphase, bei dem ein Teil der gasförmigen Reaktionskomponenten tangential in den Reaktor eingeleitet wird. Dieses Verfahren ist darauf ausgelegt, einerseits durch die tangentiale Einleitung einer Reaktionskomponente eine Ansatzbildung an den Reaktorwänden zu vermindern und andererseits eine rasche Durchmischung der Reaktionskomponenten durch Erzeugung einer Rückströmung (sog. "Swirl Flow") zu erreichen. Der Swirl Flow wird dadurch weiter verstärkt, dass sich der Querschnitt des Reaktors konusartig in Strömungsrichtung erweitert. Allerdings führt Swirl Flow zu unterschiedlich langen Verweilzeiten der einzelnen Partikel im Reaktor.

Die U.S. Patentschrift 3,725,526 beschreibt ein Verfahren zur Herstellung von Titandioxid in der Rutil-Modifikation, wobei das Titantetrachlorid in einem Winkel zwischen 0° und 45° senkrecht zu der Reaktorachse in den Reaktor eingeleitet wird.

Für die Titandioxid-Pigmentqualität, insbesondere das Aufhellvermögen (tinting strength TS) ist eine enge Korngrößenverteilung wichtig. Zur Erzeugung einer engen Korngrößenverteilung kommt es jedoch nicht auf eine rasche Durchmischung der Reaktionskomponenten sondern auf eine enge Verweilzeitverteilung der TiO₂-Partikel im Reaktor an, so dass jede Art von Rückströmung im Reaktor vermieden werden sollte.

### Aufgabenstellung und Kurzfassung der Erfindung

Der Erfindung liegt die Aufgabe zugrunde, ein gegenüber dem Stand der Technik verbessertes Verfahren anzugeben, um einerseits die Innenwand des Rohrreaktors und der Reaktor-Kühlstrecke mit Hilfe von Scheuerteilchen effektiv von TiO₂-Anlagerungen zu befreien und damit eine bessere Kühlleistung zu erzielen und andererseits ein TiO₂-Pigment mit enger Korngrößenverteilung zu erzeugen.

Die Aufgabe wird gelöst durch ein Verfahren zur Herstellung von Titandioxid-Partikeln in einem zylindrischen Rohrreaktor durch Reaktion von Titantetrachlorid und einem axial eingeleiteten, sauerstoffhaltigen Gas und anschließender Kühlung der Partikel in einer sich anschließenden Reaktor-Kühlstrecke unter Zugabe von Scheuerteilchen, dadurch gekennzeichnet, dass das Titantetrachlorid in der Querschnittsebene des Rohrreaktors, aber abweichend von der radialen Richtung in den Rohrreaktor eingeführt wird und dass die Strömungsgeschwindigkeit des sauerstoffhaltigen Gas mehr als 20 m/s insbesondere mindestens 40 m/s beträgt.

Weitere vorteilhafte Ausführungen der Erfindung sind in den Unteransprüchen beschrieben.

### Beschreibung der Erfindung

Die Erfindung wird mit Hilfe der Figuren 1, 2 und 3 erläutert, ohne dass damit eine Einschränkung beabsichtigt ist.
Figur 1 stellt schematisch den Längschnitt durch den Reaktor dar.
Figur 2 ist eine Querschnittsansicht entlang des Schnitts 2-2 in Fig. 1 für eine Ausführung der Erfindung und
Figur 3 ist eine Querschnittsansicht entlang des Schnitts 2-2 in Fig. 1 für eine andere Ausführung der Erfindung.

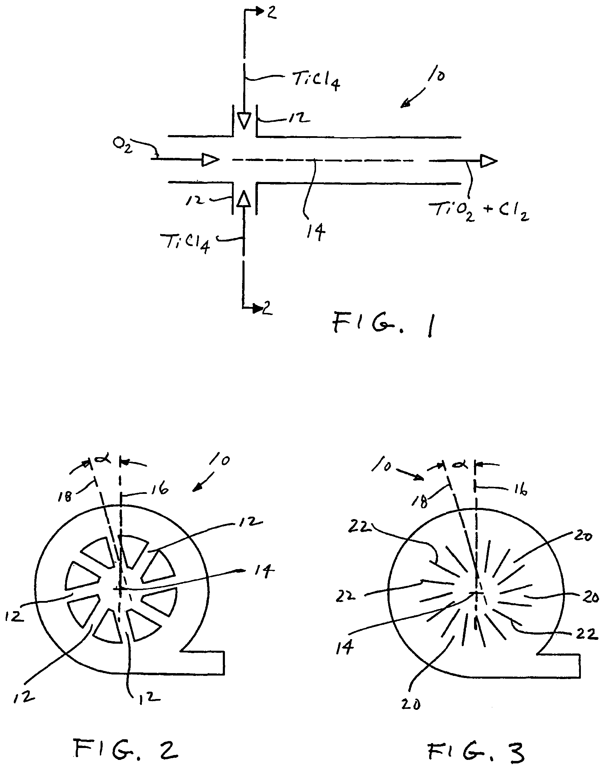

Hier und im Folgenden wird unter Rohrreaktor der Teil des Reaktors verstanden, in dem die TiCl₄-Oxidationsreaktion und die TiO₂-Partikelbildung stattfinden (s. Fig. 1, Nr. 10). Als Reaktor-Kühlstrecke wird der sich anschließende Teil des rohrförmigen Reaktors verstanden, wo die Reaktion durch schnelle Kühlung abgebrochen und die Gassuspension weiter abgekühlt wird. Üblicherweise werden zusammen mit dem TiCl₄ verschiedene Additive und Gase wie Aluminiumchlorid, Chlor, Stickstoff, Alkalisalze etc. in den Reaktor eingeleitet. Hier und im Folgenden soll unter "TiCl₄" der sauerstofffreie, im Wesentlichen aus TiCl₄ bestehende Strom verstanden werden. Unter "O₂" soll hier und im Folgenden der sauerstoffhaltige Gasstrom verstanden werden.

Die Erfindung geht von der Erkenntnis aus, dass ein wesentlicher Teil der Wärmeabfuhr am Anfang der Reaktor-Kühlstrecke erfolgt, wo die hohe Temperatur der TiO₂-Gassuspension ein hohes treibendes Temperaturgefälle zur Rohr-Innenwand erzeugt. In diesem Teil kann die abrasive Wirkung der Scheuerteilchen deutlich verbessert werden, indem die Scheuerteilchen-Strömung oder die gesamte Strömung in Rotation versetzt wird. Durch die Rotation und die Fliehkraft werden die Scheuerteilchen über den gesamten Umfang des Rohres verteilt und zugleich an die Wand gedrückt, wodurch diese gleichmäßig und intensiv abgereinigt wird.

Bezugnehmend auf Figuren 1 bis 3 wird das TiCl₄ bevorzugt über Düsen (12) in den Reaktor (10) eingeführt. Im Rahmen der Erfindung werden unter Düsen alle Arten von Einleitungen wie auch Kanäle, Rohre etc. und alle Arten von Düsen wie auch Venturi- oder Laval-Düsen verstanden. Der Reaktor (10) hat eine zylindrische Form mit einer Längsachse (14). Sauerstoff wird entlang der Längsachse (14) in den Reaktor (10) eingeführt. TiCl₄ wird über Düsen (12) in tangentialer Richtung in den Reaktor (10) eingeführt, nicht in radialer Richtung. Figur 2 zeigt einen Querschnitt durch den Reaktor (10), wobei der Radius mit der Linie (16) gekennzeichnet ist. Das TiCl₄ wird in den Reaktor (10) in einer tangentialen Richtung, die durch die Linie (18) gekennzeichnet ist, eingeführt. Die Linie (18) weicht von der radialen Richtung (16) um den Winkel *α* ab.
Die Düsen (12) können an einer gemeinsamen axialen Position auf dem Umfang des Reaktors (10) verteilt sein (Fig. 2). Alternativ können die Düsen (12) auch axial zu einander versetzt positioniert sein.
In einer weiteren Ausführung der Erfindung kann das TiCl₄ auch über eine schlitzartige Öffnung (20) in den Reaktor eingeführt werden (Fig. 3). Bei dieser Ausführung bewirken Leitbleche (22) in der schlitzartigen Öffnung (20), die mit einem entsprechenden Winkel *α* angestellt sind, die tangentiale Richtung der Strömung.

Erfindungsgemäß wird die gesamte Strömung - Reaktionsgemisch und Scheuerteilchen - im Rohrreaktor (10) und in der Reaktor-Kühlstrecke in Rotation versetzt, indem das zudosierte Titantetrachlorid tangential in den Rohrreaktor (10) eingeführt wird. Aufgrund seines hohen spezifischen Gewichts führt das TiCl₄ einen erheblichen tangentialen Impuls in die Strömung ein, der ausreicht, eine lang anhaltende Rotation zu erzeugen.
Tangentiale Einführung des TiCl₄ in den Rohrreaktor (10) bedeutet, dass die Einführung in der Querschnittsebene des Rohrreaktors (10), aber in einem Winkelbereich von *α* >0° bis <90°, bevorzugt 1° bis 15° und insbesondere 5° bis 10° zur radialen Richtung erfolgt (Fig. 2 und 3).

Überraschenderweise können bei dem erfindungsgemäßen Verfahren Rückströmungen (Swirl Flow) im Reaktor (10) weitgehend vermieden und dadurch eine gleichmäßige Verweilzeit für alle TiO₂-Partikel im Reaktor (10) erreicht werden. Im Gegensatz zur Lehre der DE 1 259 851 wird dies dadurch erreicht, dass die axial eingeführte O₂-Strömung eine Strömungsgeschwindigkeit von mehr als 20 m/s insbesondere mindestens 40 m/s aufweist und der Rohrreaktor (10) eine zylindrische Form besitzt. Unter diesen Voraussetzungen ist es möglich, einen hohen tangentialen Impuls einzubringen, um eine starke Reinigungswirkung zu erreichen, ohne Swirl Flow zu erzeugen. Das Verhältnis der spezifischen Impulse (Verhältnis der Produkte aus Strömungsgeschwindigkeit und spezifischem Gewicht) der tangential eingeleiteten (TiCl₄) zur axial eingeleiteten (O₂) Reaktionskomponente beträgt mindestens etwa 100.

Die Verbesserung des Wärmeübergangs zur Wand der Kühlstrecke durch die erfindungsgemäße TiCl₄-Einleitung kann weiter verbessert werden, wenn die Scheuerteilchen bei ihrer Einführung in den Rohrreaktor (10) weitgehend zerstreut werden wodurch eine gleichmäßige Verteilung der Scheuerteilchen und demzufolge eine gleichmäßige Abreinigung der Reaktorwand bewirkt werden. Die Zerstreuung kann erreicht werden, indem der Strom der Scheuerteilchen vor Einführung in den Reaktor in starke Rotation versetzt wird. Diese Rotation kann beispielsweise dadurch erreicht werden, dass der Dosierstutzen ähnlich einem Zyklon ausgeführt ist, in den der Strom der Scheuerteilchen mittels pneumatischer Förderung tangential eingeleitet wird.

Die Erfindung zeichnet sich gegenüber den Verfahren gemäß US 6,419,893 B1 und US 2006/0133989 A1 dadurch aus, dass einerseits die gesamte Strömung in Rotation versetzt und somit die Abreinigung der Innenwand und die Kühlung der Gassuspension optimiert werden. Weiterhin sind keine aufwendigen konstruktiven Maßnahmen stromabwärts von der TiCl₄-Zuführung erforderlich, wie verschleißempfindliche Inneneinbauten oder die schraubenförmige Ausführung der gesamten Reaktor-Kühlstrecke. Die Erfindung zeichnet sich des Weiteren gegenüber dem Verfahren gemäß DE 1 259 851 dadurch aus, dass trotz des hohen tangentialen Impulses der TiCl₄-Strömung Swirl Flow vermieden wird und TiO₂-Pigmentpartikel mit enger Korngrößenverteilung und damit verbessertem Aufhellvermögen (TS) hergestellt werden können.

### Beispiel

Die Erfindung wird nachfolgend beispielhaft erläutert, ohne dass damit eine Einschränkung beabsichtigt ist.
12 t/h TiCl₄ werden mittels 10 kreisrunder Düsen in einen Rohrreaktor mit einem Innendurchmesser von ca. 0,3 m eingeführt und mit vorerhitztem sauerstoffhaltigem Gas zur Reaktion gebracht. Die Düsen sind an einer gemeinsamen axialen Position im Rohrreaktor positioniert und gleichmäßig über den Umfang verteilt. Alle Düsen sind in gleicher Richtung in der Querschnittsebene in der Weise tangential angestellt, in dem sie um einen Winkel *α* von 6° von der radialen Richtung abweichen. Mit dieser Konfiguration wird der Bedarf an Scheuerteilchen gegenüber einer rein radialen Anordnung der Düsen von etwa 2,0 auf 1,2 t/h gesenkt.

## Patentansprüche

1. Verfahren zur Herstellung von Titandioxid-Partikeln in einem zylindrischen Rohrreaktor durch Reaktion von Titantetrachlorid und einem axial eingeleiteten, sauerstoffhaltigen Gas und Kühlung der Partikel in einer sich anschließenden Reaktor-Kühlstrecke unter Zugabe von Scheuerteilchen,
**dadurch gekennzeichnet,**
**dass** das Titantetrachlorid in der Querschnittsebene des Rohrreaktors, aber abweichend von der radialen Richtung in den Rohrreaktor eingeführt wird und dass die Strömungsgeschwindigkeit des sauerstoffhaltigen Gases mehr als 20 m/s insbesondere mindestens 40 m/s beträgt.

2. Verfahren nach Anspruch 1, **dadurch gekennzeichnet,**
**dass** das Titantetrachlorid unter einem Winkel *α* zwischen >0° und <90°, bevorzugt unter einem Winkel zwischen 1° und 15° und besonders bevorzugt unter einem Winkel zwischen 5° und 10° zur radialen Richtung eingeführt wird.

3. Verfahren nach Anspruch 1 oder 2 **dadurch gekennzeichnet,**
**dass** das Titantetrachlorid mittels Einzeldüsen eingeführt wird.

4. Verfahren nach Anspruch 3 **dadurch gekennzeichnet,**
**dass** die Düsen axial gegeneinander versetzt sind.

5. Verfahren nach Anspruch 1 oder 2 **dadurch gekennzeichnet,**
**dass** das Titantetrachlorid durch eine schlitzförmige Öffnung, welche abweichend von der radialen Richtung angeordnete Leitbleche aufweist, eingeführt wird.

6. Verfahren nach einem oder mehreren der vorangegangenen Ansprüche **dadurch gekennzeichnet,**
**dass** der Scheuerteilchen-Strom vor Einführung in den Reaktor in starke Rotation versetzt wird.

7. Verfahren nach einem oder mehreren der vorangegangenen Ansprüche **dadurch gekennzeichnet,**
**dass** das Produkt aus Strömungsgeschwindigkeit und spezifischem Gewicht des TiCl₄-Stroms gegenüber dem gleichen Produkt des O₂-Stroms mindestens etwa das 100fache beträgt.

## Claims

1. Method for the preparation of titanium dioxide particles in a cylindrical tubular reactor by reaction of titanium tetrachloride and an axially introduced, oxygen-containing gas and cooling of the particles in a subsequent reactor cooling section with the addition of scrub solids, **characterized in that**
the titanium tetrachloride is introduced into the tubular reactor in the cross-sectional plane of the tubular reactor, but deviating from the radial direction, and that the flow velocity of the oxygen-containing gas is more than 20 m/s, in particular at least 40 m/s.

2. Method according to claim 1, **characterized in that**
the titanium tetrachloride is introduced at an angle α of between > 0° and < 90 °, preferably at an angle of between 1 ° and 15 ° and particularly preferably at an angle of between 5 ° and 10 ° to the radial direction.

3. Method according to claim 1 or 2 **characterized in**
**that** the titanium tetrachloride is introduced by means of individual nozzles.

4. Method according to claim 3, **characterized in that**
the nozzles are axially offset relative to each other.

5. Method according to claim 1 or 2 **characterized in that**
the titanium tetrachloride is introduced through a slot-shaped opening which has baffles arranged deviating from the radial direction.

6. Method according to one or more of the preceding claims, **characterized in that**
the scrub solids stream is set in strong rotation before introduction into the reactor.

7. Method according to one or more of the preceding claims, **characterized in that**
the product of flow rate and specific gravity of the titanium tetrachloride flow compared to the same product of the oxygen flow is at least about 100 times.

## Revendications

1. Procédé de fabrication de particules de dioxyde de titane dans un réacteur tubulaire cylindrique par réaction du tétrachlorure de titane et d'un gaz contenant de l'oxygène introduit de façon axiale et par refroidissement des particules dans une section de refroidissement de réacteur en aval avec ajout de particules abrasives, **caractérisé en ce que** le tétrachlorure de titane est introduit dans le réacteur tubulaire dans le plan de section transversale du réacteur tubulaire mais en s'écartant de la direction radiale et **en ce que** la vitesse d'écoulement du gaz contenant de l'oxygène est supérieure à 20 m/s et est au moins égale à 40 m/s.

2. Procédé selon la revendication 1, **caractérisé en ce que** le tétrachlorure de titane est introduit sous un angle α compris entre > 0° et < 90°, de préférence sous un angle compris entre 1° et 15° et de manière particulièrement préférée sous un angle compris entre 5° et 10°, par rapport à la direction radiale.

3. Procédé selon la revendication 1 ou 2, **caractérisé en ce que** le tétrachlorure de titane est introduit au moyen de buses individuelles.

4. Procédé selon la revendication 3, **caractérisé en ce que** les buses sont décalées de façon axiale les unes par rapport aux autres.

5. Procédé selon la revendication 1 ou 2, **caractérisé en ce que** le tétrachlorure de titane est introduit par une ouverture en forme de fente qui comporte des tôles déflectrices agencées dans une direction différente de la direction radiale.

6. Procédé selon une ou plusieurs des revendications précédentes, **caractérisé en ce que** le flux de particules abrasives est mis en forte rotation avant introduction dans le réacteur.

7. Procédé selon une ou plusieurs des revendications précédentes, **caractérisé en ce que** le produit de la vitesse d'écoulement et du poids spécifique du flux de TiCl₄ vaut au moins à peu près 100 fois le même produit du flux de O₂.
